Europäisches Patentamt

European Patent Office

Office européen des brevets

(19)

(11) Numéro de publication: **0 055 952**
**B1**

# FASCICULE DE BREVET EUROPEEN

(12)

(45) Date de publication du fascicule du brevet: **22.02.84**

(51) Int. Cl.³: **B 65 D 51/00**

(21) Numéro de dépôt: **81401950.1**

(22) Date de dépôt: **08.12.81**

(54) **Bouchon pour récipient, notamment pour réservoir à carburant de véhicule automobile.**

(30) Priorité: **07.01.81 FR 8100131**

(43) Date de publication de la demande:
**14.07.82 Bulletin 82/28**

(45) Mention de la délivrance du brevet:
**22.02.84 Bulletin 84/8**

(84) Etats contractants désignés:
**DE GB IT SE**

(56) Documents cités:
**FR - A - 2 285 503**
**US - A - 1 924 308**
**US - A - 2 431 458**

(73) Titulaire: **COMPAGNIE INDUSTRIELLE DE MECANISMES en abrégé C.I.M. Société dite:**
**6, Rue Barbès**
**F-92302 Levallois Perret (FR)**

(72) Inventeur: **Canadas, Jean-Christophe**
**28, rue des Etats Unis**
**F-88200 Remiremont (FR)**
Inventeur: **Steiner, Michel**
**2, rue du Canton**
**F-88200 Remiremont (FR)**

(74) Mandataire: **Moncheny, Michel et al,**
**c/o Cabinet Lavoix 2 Place d'Estienne d'Orves**
**F-75441 Paris Cedex 09 (FR)**

Courier Press, Leamington Spa, England.

EP 0 055 952 B1

Bouchon pour recipient, notamment pour reservoir a carburant de vehicule automobile

La présente invention est relative à un bouchon pour récipient, notamment pour réservoir à carburant de véhicule automobile, du type comprenant des organes de verrouillage du bouchon sur une ouverture du récipient et des organes de condamnation du bouchon en position verrouillée actionnés par une clé et indépendants des organes de verrouillage, ces organes de condamnation comprenant un barillet à clé monté rotatif dans le corps du bouchon et au moins un élément de condamnation mobile radialement dans le corps de façon à faire saillie à travers une fenêtre du corps ou à s'escamoter dans ce corps au moyen d'une came actionnée par le barillet.

Un tel bouchon est décrit par le document FR—A—2 285 503, dans lequel l'élément de condamnation est un anneau monté à rotation sur une came liée au barillet de la clé.

Pour éviter les vols, il est classique que les bouchons comprennent, outre des organes de verrouillage sur une ouverture du récipient, des organes indépendants de condamnation ou blocage actionnés par une clé. Ces bouchons peuvent, lorsqu'on le désire, être verrouillés et déverrouillés simplement à la main, sans que chaque manoeuvre du bouchon nécessite l'utilisation de la clé. Ceci est par exemple avantageux lorsqu'un conducteur de véhicule automobile effectue un long trajet exigeant plusieurs rapprovisionnements en carburant.

Dans les bouchons du type précité, l'élément de condamnation peut également être constitué par un coulisseau dans une boutonnière duquel s'engage un téton du barillet (US—A—1 924 308 et US—A—2 431 458). Ces réalisations demandent beaucoup de précision et rendent compliqué le montage du bouchon, surtout si l'on souhaite disposer de plusieurs éléments de condamnation répartis sur la périphérie du bouchon.

L'invention a pour but de fournir un bouchon présentant les mêmes propriétés mais beaucoup moins coûteux à réaliser.

A cet effet, l'invention a pour objet un bouchon du type précité, caractérisé en ce que les éléments de condamnation sont chacun constitués par l'extrémité libre d'une lame élastique qui fait partie d'une pièce unique fixée au corps.

Pour assurer de façon fiable une condamnation équilibrée en plusieurs points de la périphérie du bouchon sans en compliquer le montage, le bouchon selon l'invention comprend avantageusement plusieurs éléments de condamnation régulièrement rèpartis à sa périphérie.

L'invention est exposée ci-après plus en détaïl à l'aide des dessins annexés, qui en représentent seulement un mode d'exécution. Sur ces dessins:

la Fig. 1 est une vue en élévation latérale d'un bouchon de réservoir d'automobile conforme à l'invention, en position inactive des organes de condamnation;

la Fig. 2 est une vue en plan de ce bouchon;

les Figs. 3 et 4 sont des vues prises respectivement en coupe suivant les lignes 3—3 et 4—4 de la Fig. 2;

la Fig. 5 est une vue prise en coupe suivant la ligne 5—5 de la Fig. 4;

la Fig. 6 est une vue analogue à la Fig. 4 du bouchon en position active des organes de condamnation;

la Fig. 7 est une vue prise en coupe suivant la ligne 7—7 de la Fig. 6;

la Fig. 8 est une vue en perspective d'une pièce de condamnation du bouchon;

la Fig. 9 est une vue en plan de l'ouverture d'une pipe de remplissage de réservoir de carburant destinée à être obturée par le bouchon des Fig. 1 à 8;

la Fig. 10 représente le développement de cette ouverture de remplissage.

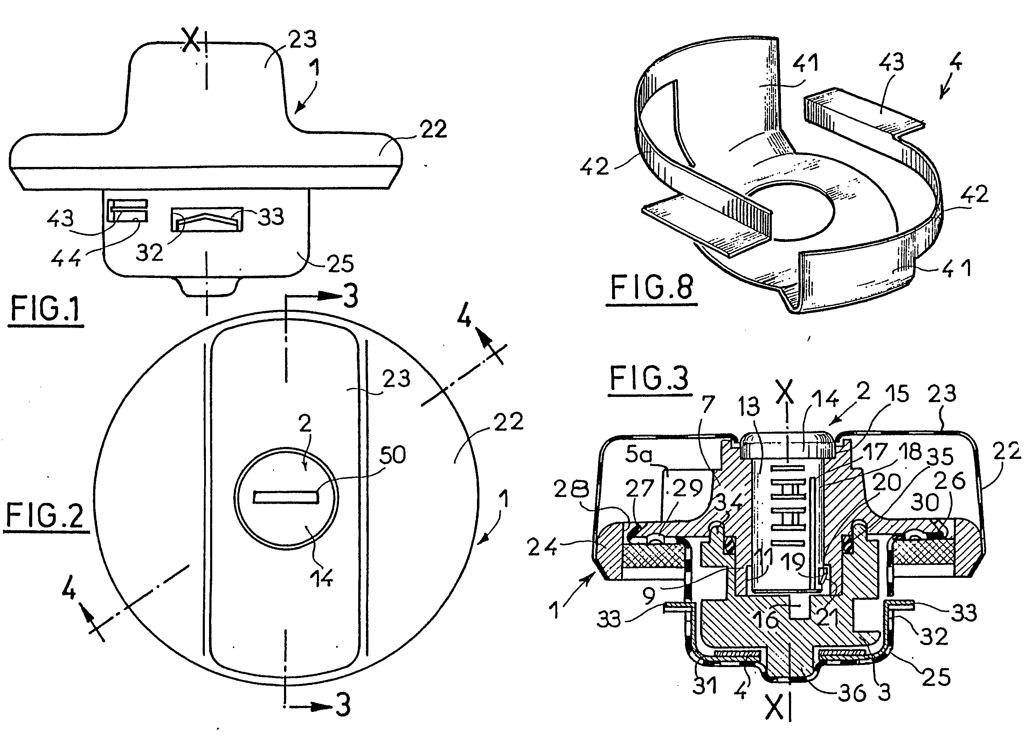

Le bouchon de réservoir représenté aux Fig. 1 à 8 comprend essentielment un corps 1,un barillet 2,une double came 3 et une pièce de condamnation 4 représentée isolément en perspective à la Fig. 8.

Le corps 1 comporte une pièce supérieure 5, par exemple en matière plastique, présentant la forme générale d'un disque horizontal 6 d'axe vertical X—X pourvu sur sa face supérieure d'une saillie tubulaire 7. La saillie 7 est percée d'un alésage cylindrique 8 d'axe X—X et se prolonge vers le bas par un collet 9 extérieurement cylindrique. La partie inférieure de ce dernier présente sur une petite fraction de sa circonférence une paroi intérieure cylindrique 10 de diamètre égal à celui de l'alésage 8 et, sur le reste de sa surface, une paroi intérieure cylindrique 11 de plus grand diamètre qui se raccorde à la paroi 10 par deux surfaces planes et coplanaires 12 parallèles à l'axe X—X (Fig. 5 et 7).

Le barillet 2 comporte une partie principale cylindrique 13 au diamètre de l'alésage 8, logée dans celui-ci et surmontée d'une tête plus large 14. Cette tête 14 est reçue dans un contrealésage 8. La face inférieure du barillet 2 se trouve à peu près dans le même plan horizontal que celle du collet 9 du corps 1, et au-delà de cette face fait saillie vers le bas un tenon excentré 16.

La partie 13 du barillet 2 présente à partir du bas deux fentes verticales voisines 17 qui délimitent entre elles une languette élastique 18 dont l'extrémité inférieure porte une saillie extérieure 19. Cette dernière a la forme d'un bloc dont la face supérieure 20 est horizontale et la face inférieure 21 inclinée vers le bas et vers l'intérieur et qui est logé dans la région 11 de grand diamètre du collet 9.

La saillie 19 a une double fonction de retenue axiale et de butée latérale: lorsqu'on introduit le barillet 2 dans l'alésage 8, la languette 18 est repoussée radialement vers l'intérieur, et elle revient élastiquement à sa forme initiale lorsque la saillie 19 est entièrement contenue dans la région 11 du collet 9. Ceci se produit lorsque la tête 14 du barillet vient en butée axiale, de sorte que le barillet se monte par simple encliquetage. Par ailleurs, la rotation du barillet 2 dans les deux sens est limitée par la venue de la saillie 19 en butée contre l'une ou l'autre des surfaces planes 12 du corps 1. Dans l'exemple représenté, ces deux butées correspondent à deux positions du barillet 2 à 180° l'une de l'autre. De plus, le barillet 2 contient un mécanisme de serrure à clé.

Sur la pièce 5 du corps 1 est fixé un capuchon creux 22 ouvert vers le bas, en tôle prélaquée emboutie ou en matière plastique. La forme intérieure de ce capuchon épouse celle de la pièce 5, à l'exception du fait qu'il comporte une saillie diamétrale 23 dont la largeur correspond au diamètre extérieur de la saillie tubulaire 7 de la pièce 5. La périphérie inférieure du capuchon 22 est fixée, par exemple sertie ou soudée par soudage à ultrasons, sur celle d'une jupe 24 en saillie vers le bas sur la périphérie du disque 6 de la pièce 5. Le milieu de la saillie 23 est percé d'un trou circulaire dont le pourtour est fixé sur celui du contre-alésage 15 de cette même pièce 5. La solidarisation en rotation du capuchon 22 et de la pièce 5 est assurée par des saillies radiales 5ᵃ de cette dernière (Fig. 3) qui coopèrent avec la saillie diamétrale 23 du capuchon 22.

La partie inférieure du corps 1 est constituée par une cuvette 25 en tôle emboutie, d'axe X—X, qui présente un rebord supérieur 26 rabattu vers l'extérieur dans le plan horizontal. La partie supérieure de cette cuvette 25 pénètre dans la jupe 24, et la périphérie du rebord 26 est fixée au disque 6 par sertissage d'une série de pattes circonférentielles 27 dans des ouvertures correspondantes 28 qui traversent ce disque. Le sertissage des pattes 27 solidarise les pièces 25 et 5 et assure le contact étanche du disque 6 et d'un bossage circulaire 29 embouti vers le haut dans le rebord 26.

Le corps 1 est complété par un joint élastique annulaire 30 appliqué sous le rebord 26, entre la paroi extérieure cylindrique de la cuvette 25 et la paroi intérieure de la jupe 24, et par une lame 31 en acier inoxydable. Cette dernière comporte une âme annulaire d'où partent deux bras diamétralement opposés qui épousent la forme intérieure de la cuvette 24 et, au droit de deux fenêtres 32 de celle-ci, sont rabattus à angle droit vers l'extérieur pour former deux pattes de verrouillage 33. Comme on le voit à la Fig. 1, les pattes 32 ont une forme en toit très ouverte. La lame 31 est soudée par points au fond de la cuvette 25.

La double came 3 s'inscrit dans une pièce de forme générale cylindrique d'axe X—X qui présente à son sommet un évidement cylindrique de même axe emboîté sans jeu sur le collet 9 et dont l'ouverture est entourée d'une saillie circulaire 34. Le fond de cet évidement présente un trou excentré qui reçoit le tenon 16 du barillet 2, ce qui rend ce barillet solidaire de la pièce 3 en rotation. La saillie 34 est reçue dans une gorge circulaire de la face inférieure du disque 6, et un joint d'étanchéité annulaire 35 et logé entre cette saillie et la paroi extérieure du collet 9. Sur la face inférieure de la pièce 3 fait saillie un bossage cylindrique central 36 reçu dans un évidement complémentaire du fond de la cuvette 25, ce qui complète le guidage en rotation de la double came.

La pièce 3 comporte deux rainures-cames superposées 37 de rayon variable sur la périphérie (Fig. 5 et 7). Plus précisément, chaque rainure 37 présente une région 38 de petit rayon, une région 39 de grand rayon, et deux régions 40 de raccordement à rayon variable. Les régions 38 des deux rainures sont diamétralement opposées, et il en est de même des régions 39 d'une part et des paires de régions 40 d'autre part.

La pièce de condamnation 4, réalisée en acier inoxydable plié, comprend une âme annulaire soudée sur celle de la lame 31. De cette âme partent deux bras 41 diamétralement opposés épousant le profil intérieur de la cuvette 25. De l'extrémité libre de chaque bras 41 part une lame élastique horizontale 42 s'étendant sur environ un quart de tour et dont l'extrémité libre est repliée à angle droit vers l'extérieur pour former une patte de condamnation horizontale 43. Les deux pattes 43 se trouvent à des niveaux légèrement différents, en regard de deux fenêtres diamétralement opposées 44 de la cuvette 25, et s'appliquent élastiquement contre les rainures-cames 37 de la pièce 3 respectivement.

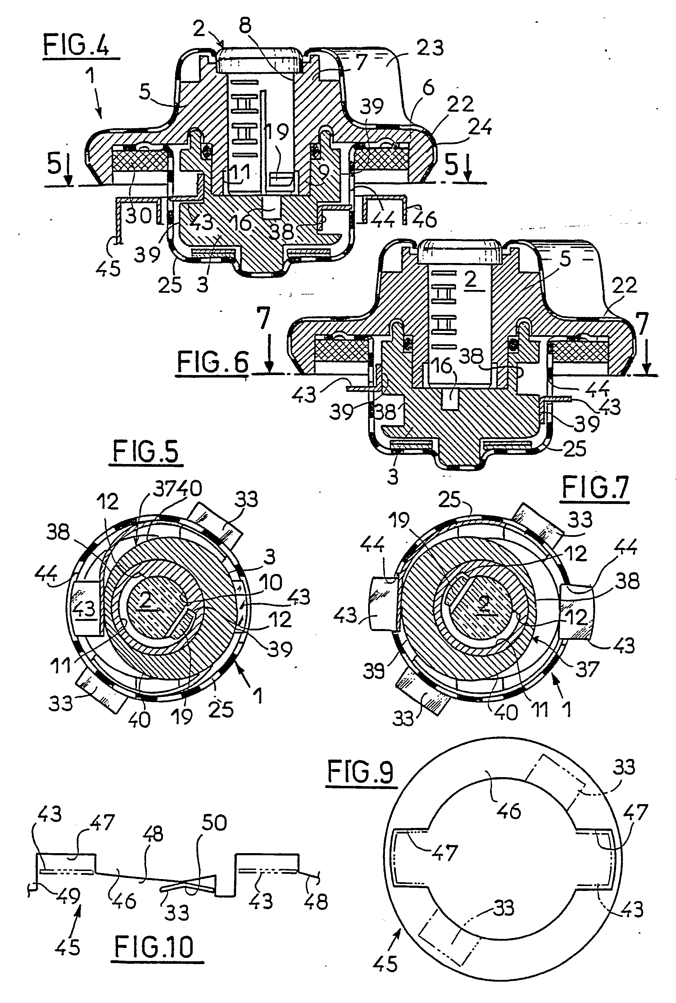

Dans une position limite du barillet 2, représentée aux Fig. 4 et 5, les deux régions 38 de petit rayon se trouvent au droit des fenêtres 44. Les extrémités libres des lames 42 de la pièce 4 s'appliquent élastiquement sur ces régions 38, de sorte que les pattes 43 sont entièrement escamotées dans la cuvette 25.

Lorsqu'on amène le barillet 2 dans son autre position limite, les régions 40 puis les régions 39 à grand rayon viennent en regard des fenêtres 44 et font saillir progressivement les pattes 43 hors de ces fenêtres, jusqu'à la position de condamnation des Fig. 6 et 7. La structure du barillet permet l'extraction de la clé dans ses deux positions limites.

Le bouchon ainsi décrit est destiné à obturer l'ouverture de remplissage 45 d'une pipe de remplissage d'un réservoir de carburant de véhicule automobile. L'ouverture 45 a été illustrée aux Fig. 9 et 10 et schématisée à la Fig. 4.

Pour mettre en place le bouchon, les pattes 43 étant rétractées, on accroche les pattes de verrouillage 33 sous le rebord d'extrémité 46, doublement rabattu vers l'intérieur (Fig. 4), de la pipe de remplissage.

Cet accrochage s'effectue sans clé: en se référant aux Fig. 9 et 10, par un déplacement axial vers le bas, les pattes 33 traversent sans jeu des encoches 47 du rebord 46, puis, par une rotation du bouchon obtenue en agissant sur la saillie diamétrale 23 du capuchon 22 à la manière d'un papillon, les pattes 33 s'insèrent sous ce rebord et en parcourent une rampe descendante 48, jusqu'à buter sur un ergot 49 adjacent à l'encoche 47 opposée après franchissement d'un point bas par le sommet de chaque patte 33. L'étanchéité résulte de la compression de tout le pourtour du joint 30 sur le rebord 46. La rotation du bouchon est limitée à environ 120° par les butées 49 prévues sur la pipe de remplissage, et, lorsque le bouchon est en place, les fenêtres 44 se trouvent en regard des encoches 47 de passage des pattes 33.

On peut ensuite retirer le bouchon à la main par un mouvement inverse de rotation puis translation axiale vers le haut, et répéter ces opérations autant de fois que nécessaire, sans intervention de la clé.

Si par contre, le bouchon étant en place, on désire le condamner, on fait tourner le barillet 2, au moyen d'une clé introduite dans une fente supérieure 50 de celui-ci (Fig. 1). jusqu'à son autre position extrême (Fig. 6—7), Ceci amène les régions 40 de transition, puis 39 de grand diamètre des rainures-cames 37 en regard des fenêtres 44 en faisant saillir les pattes 43 hors de celles-ci. Les pattes 43 pénètrent alors dans les encoches 47 de la pipe 45 et bloquent ainsi toute rotation ultérieure du bouchon dans les deux sens, comme représenté en traits mixtes aux Fig. 9 et 10. Le bouchon est alors condamné et ne peut être retiré qu'en rétractant au moyen de la clé les pattes 43 par retour du barillet 2 à sa position d'origine, puis en déverrouillant l'accrochage baïonnette de la façon décrite plus haut.

On remarque que le bouchon suivant l'invention peut être utilisé avec une pipe de remplissage ayant une ouverture classique, éventuellement rapportée, telle que celle représentée aux Fig. 9 et 10.

Dans le mode de réalisation représenté aux dessins, le bouchon est de type étanche. En variante, le bouchon peut comprendre un dispositif quelconque de ventilation, par exemple du type clapet à bille ou à membrane, incorporé à la pièce 5 du corps 1.

Il est à noter qu'une modification mineure du bouchon permet de le transformer en bouchon sans clé. En effet, il suffit pour cela d'utiliser un capuchon 22 dépourvu d'ouverture centrale et/ou de réaliser l'ensemble 3—5 en une seule pièce moulée.

En variante encore, ou pourrait bien entendu prévoir plus de deux pattes 33 et/ou plus de deux pattes 43 régulièrement réparties sur la périphérie du bouchon, la forme des rainures-cames 37 étant éventuellement modifiée de façon correspondante.

## Revendications

1. Bouchon pour récipient, notamment pour réservoir à carburant de véhicule automobile, du type comprenant des organes (33) de verrouillage du bouchon sur une ouverture du récipient et des organes de condamnation du bouchon en position verrouillée actionnés par une clé et indépendants des organes de verrouillage, ces organes de condamnation comprenant un barillet (2) à clé monté rotatif dans le corps (1) du bouchon et au moins un élément de condamnation (43) mobile radialement dans le corps de façon à faire saillie à travers une fenêtre (44) du corps ou à s'escamoter dans ce corps au moyen d'une came (37) actionnée par le barillet (2), ce bouchon étant caractérisé en ce que les éléments de condamnation (43) sont chacun constitués par l'extrémité libre d'une lame élastique (42) qui fait partie d'une pièce unique (4) fixée au corps (1).

2. Bouchon suivant la revendication 1, caractérisé en ce que chaque organe de verrouillage (33) est constitué par une saillie du corps (1) décalée circonférentiellement par rapport à la fenêtre (44) et destinée à traverser une encoche (47) d'un rebord (46) du récipient puis à s'insérer sous ce rebord par rotation d'un angle prédéterminé, pour réaliser un verrouillage par accrochage du type baïonnette, et en ce que cet angle est égal audit décalage circonférentiel.

3. Bouchon suivant l'une des revendications 1 et 2, caractérisé en ce que la came (37) est une came à rayon variable montée rotative dans le corps (1) et solidaire du barillet (2).

4. Bouchon suivant l'une quelconque des revendications 1 à 3, caractérisé en ce que les éléments de condamnation (43) sont régulièrement répartis sur la périphérie du bouchon.

5. Bouchon suivant la revendication 1, caractérisé en ce que ladite pièce unique (4) comprend une âme centrale fixée sur le fond du corps (1) et d'où partent des bras (41) porte-lame d'orientation générale axiale, chaque lame (42) s'étendant circonférentiellement à partir de l'extrémité libre d'un bras.

6. Bouchon suivant l'une des revendications 4 et 5, caractérisé en ce que les éléments de condamnation (43) sont décalés axialement, et en ce qu'une pièce (3) monté rotative dans le corps (1) et solidaire du barillet (2) porte plusieurs rainures-cames à rayon variable (37) superposées et décalées circonférentiellement, sur le fond de chacune desquelles s'applique élastiquement un élément de condamnation (43).

## Claims

1. A cap for a container, in particular for a fuel tank of a motor vehicle, of the type comprising means (33) for attaching the cap to an opening of the container, and means for locking the cap in the attached position and actuated by a key and independent from the attaching means, said locking means comprising a barrel (2) for a key and rotatably mounted in the body (1) of the cap and at least one locking element (43) which is radially movable in the body so as to project through an aperture (44) in the body or to retract into this body by means of a cam (37) actuated by the barrel (2), this cap being characterised in that the locking means (43) are each constituted by the free end of an elastically yieldable strip (42) which is part of a single element (4) fixed to the body (1).

2. A cap according to claim 1, characterised in that each attaching means (33) is constituted by a projection of the body which is circumferentially offset relative to the aperture (44) and adapted to pass through a recess (47) of a flange (46) of the container and then to engage itself under said flange by rotation through a predetermined angle so as to produce an attachment of the cap by a hooking action of the bayonet type, and this angle is equal to said circumferential offset.

3. A cap according to one of the claims 1 and 2, characterised in that the cam (37) is a cam having a variable radius rotatively mounted in the body (1) and rigid with the barrel (2).

4. A cap according to any one of the claims 1 to 3, characterised in that the locking elements (43) are evenly spaced apart on the periphery of the cap.

5. A cap according to claim 1, characterised in that said single element (4) has a central web fixed to the bottom of the body (1) and from which generally axially extend arms (41) which carry the strips, each strip (42) extending circumferentially from the free end of an arm.

6. A cap according to one of the claims 4 and 5, characterised in that the locking elements (43) are axially offset and a member (3) rotatively mounted in the body (1) and rigid with the barrel (2) carries a plurality of cam grooves (37) which have a variable radius and are superimposed and circumferentially offset, a locking element (43) being elastically applied against the bottom of each of said cam grooves.

**Patentansprüche**

1. Verschluß für einen Behälter, insbesondere für einen Kraftstoffbehälter eines Kraftfahrzeugs, des Typs, der Verriegelungseinrichtungen (33) für den Verschluß auf einer Öffnung des Behälters und Absperreinrichtungen für den Verschluß in seiner verriegelten Stellung aufweist, die schlüsselbetätigt und unabhängig von den Verriegelungseinrichtungen sind, wobei die Absperreinrichtungen einen Schließzylinder (2) aufweisen, der im Körper (1) des Verschlusses drehbar angebracht ist und wenigstens ein Absperrelement (43) aufweist, das im Körper radial derart beweglich ist, daß es unter Durchgang durch ein Fenster (44) des Körpers vorspringt oder in den Körper mittels einer durch den Zylinder (2) beaufschlagten Nocke (37) einziehbar ist, dadurch gekennzeichnet, daß die Absperrelemente (43) des Verschlusses jeweils von dem freien Ende eines elastischen Bleches (42) gebildet werden, das ein Teil eines einteiligen Stückes (4) ist, das am Körper (1) befestigt ist.

2. Verschluß nach Anspruch 1, dadurch gekennzeichnet, daß jede Verriegelungseinrichtung (33) von einem Vorsprung des Körpers (1) gebildet wird, der in Umfangsrichtung bezüglich des Fensters (44) versetzt angeordnet ist und dazu bestimmt ist, daß er mittels einer Nut (47) eines Flansches (46) des Behälters unter den Flansch durch Verdrehen um einen bestimmten Winkel einführbar ist, um eine Verriegelung mittels eines Bajonettverschlusses zu bilden, und daß dieser Winkel gleich der Umfangsversetzung ist.

3. Verschluß nach einem der Ansprüche 1 und 2, dadurch gekennzeichnet, daß die Nocke (37) eine Nocke mit sich änderndem Radius ist, die drehbar in dem Körper (1) angeordnet ist und ein Stück mit dem Zylinder (2) bildet.

4. Verschluß nach einem der Ansprüche 1 bis 3, dadurch gekennzeichnet, daß die Absperrelemente (43) auf dem Umfang des Verschlusses gleichmäßig verteilt sind.

5. Verschluß nach Anspruch 1, dadurch gekennzeichnet, daß das einteilige Stück (4) einen Mittelsteg aufweist, der am Boden des Körpers (1) befestigt ist und von dem Türblech-Arme (41) ausgehen, die im allgemeinen in axialer Richtung weisen, und daß jedes Blech (42) ausgehend von dem freien Ende eines Arms in Umfangsrichtung verläuft.

6. Verschluß nach einem der Ansprüche 4 und 5, dadurch gekennzeichnet, daß die Absperrelemente (43) axial versetzt angeordnet sind und daß ein Stück (3), das drehbar im Körper (1) angebracht ist und ein Stück mit dem Zylinder (2) bildet, mehrere Nuten für die Nocke (37) mit sich änderndem Radius trägt, die in Umfangsrichtung übereinanderliegend und versetzt angeordnet sind, wobei auf dem Grund jeder Nut ein Absperrelement (43) elastisch anliegt.

FIG.1

FIG.2

FIG.8

FIG.3

0 055 952

FIG.4

FIG.6

FIG.5

FIG.7

FIG.9

FIG.10